# EUROPEAN PATENT APPLICATION

(11) **EP 3 745 781 A1**
(43) Date of publication of application: **02.12.2020**
(21) Application number: 20175395.1
(22) Date of filing: 19.05.2020
(51) Int. Cl.: H04W 52/02, H04W 88/06, H04W 4/80, H04W 72/04

(54) **COMMUNICATIONS DEVICE**

(30) Priority: 29.05.2019 US 201916424707
(71) Applicant: NXP B.V., 5656 AG Eindhoven (NL)
(72) Inventor: NACKAERTS, Axel, Redhill, Surrey RH1 1QZ (GB)
(74) Representative: Hardingham, Christopher Mark

(57) **Abstract**

One example discloses a first communications device, including: a first transceiver; a second transceiver; wherein the first transceiver is configured as responsive to a third transceiver in a second communications device; wherein the second transceiver is configured as responsive to a fourth transceiver in the second communications device; wherein the second transceiver has a lower-power state and a higher-power state; wherein the first and third transceivers communicate within a first distance at a first data-rate; wherein the second and fourth transceivers communicate within a second distance at a second data-rate; wherein the first distance is greater than the second distance; wherein the first data-rate is less than the second data-rate; and wherein the first communications device is configured to switch the second transceiver from the lower-power state to the higher-power state in response to the first transceiver first detecting a signal from the third transceiver in the second communications device.

## Description

The present specification relates to systems, methods and devices for communications.

### SUMMARY

According to an example embodiment, a first communications device, comprising: a first transceiver; a second transceiver; wherein the first transceiver is configured as responsive to a third transceiver in a second communications device; wherein the second transceiver is configured as responsive to a fourth transceiver in the second communications device; wherein the second transceiver has a lower-power state and a higher-power state; wherein the first and third transceivers communicate within a first distance at a first data-rate; wherein the second and fourth transceivers communicate within a second distance at a second data-rate; wherein the first distance is greater than the second distance; wherein the first data-rate is less than the second data-rate; and wherein the first communications device is configured to switch the second transceiver from the lower-power state to the higher-power state in response to the first transceiver first detecting a signal from the third transceiver in the second communications device.

In another example embodiment, the first and third transceivers are configured to communicate over a first frequency-band; the second and fourth transceivers are configured to communicate over a second frequency-band; and the first and second frequency-bands do not overlap.

In another example embodiment, the first frequency-band is a UHF-band; and the second frequency-band is a HF-band.

In another example embodiment, the second frequency-band is a NFEMI (near-field electromagnetic induction)-band. This may be a frequency band which has been reserved or allocated by one or more national, regional or other authorities for use for NFEMI signal transmission
In another example embodiment, the second and fourth transceivers are configured to communicate using a non-propagating quasi-static magnetic near-field signal and a non-propagating quasi-static electric near-field signals.

In another example embodiment, the first and third transceivers are configured to communicate over a first frequency-band using a first communications mode; the second and fourth transceivers are configured to communicate over a second frequency-band using a second communications mode; and the first and second frequency-bands overlap.

In another example embodiment, further comprising a first antenna coupled to the first transceiver and a second antenna couple to the second transceiver; wherein the first and second antennas are physically separated.

In another example embodiment, the first transceiver is powered only by energy harvested from the signal received from the third transceiver.

In another example embodiment, the first transceiver is always-on; and the second transceiver is only powered-on when the first transceiver receives the signal from the third transceiver.

In another example embodiment, the second transceiver transitions from the lower-power state to the higher-power state before the second transceiver is within the second distance from the fourth transceiver.

In another example embodiment, the second transceiver is not coupled to receive power from a power source in the lower-power state; and the second transceiver is coupled to receive power from the power source in the higher-power state.

In another example embodiment, the second transceiver is configured to communicate with the fourth transceiver in the higher-power state, and is configured not to communicate with the fourth transceiver in the lower-power state.

In another example embodiment, the first communications device is configured to be coupled only to a limited battery power source; and the second communications device is configured to be coupled to a mains power source.

In another example embodiment, the first communications device is a mobile device; and the second communications device is an edge device.

In another example embodiment, the first communications device is embedded in a key fob; and the second communications device is embedded in a security portal.

In another example embodiment, the first distance is greater than 2.5 meters; and the second distance is less than 1.5 meters.

In another example embodiment, the signal from the third transceiver is a wake-up signal.

According to an example embodiment, a method of establishing communication between a first communications device having a first and second transceivers, and a second communications device having third and fourth transceivers, comprising: configuring the first transceiver in the first communications device to be responsive to the third transceiver in the second communications device; configuring the second transceiver in the first communications device to be responsive to the fourth transceiver in the second communications device; wherein the second transceiver in the first communications device has a lower-power state and a higher-power state; wherein the first and third transceivers communicate within a first distance at a first data-rate; wherein the second and fourth transceivers communicate within a second distance at a second data-rate; wherein the first distance is greater than the second distance; wherein the first data-rate is less than the second data-rate; and configuring the first communications device to switch the second transceiver from the lower-power state to the higher-power state in response to the first transceiver first detecting a signal from the third transceiver in the second communications device.

The above discussion is not intended to represent every example embodiment or every implementation within the scope of the current or future Claim sets. The Figures and Detailed Description that follow also exemplify various example embodiments.

Various example embodiments may be more completely understood in consideration of the following Detailed Description in connection with the accompanying Drawings.

### BRIEF DESCRIPTION OF THE DRAWINGS

Figure 1 is an example of a first communications device about to pair with a second communications device.
Figure 2 is a second example of the first communications device.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

### DETAILED DESCRIPTION

Wearable, mobile and various Internet of Things/Everything (IoT/E) devices are energy-limited, but still are required to collect, process, secure, and communicate data. Of those at least three requirements, security and communications tend to be the most energy intensive.

Handshaking to authenticate such devices with other networked devices (e.g. edge nodes, computers, smartphones, servers, etc.) typically requires that the device always be powered on to communicate. Such an always-on requirement is a constant energy drain even when such device need not communicate for relatively long periods of time.

Time-synchronization (e.g. to communicate only at pre-set times) and polling (e.g. wake up repeatedly and poll the environment to detect a creator node) are some attempts to reduce this constant energy consumption. Attempts to use very-low power devices are another approach, but such devices are often more expensive. These techniques can also inadvertently also delay communications by adding time-delays for polling routines and/or the lower-powered circuits are also slower.

Now discussed are example embodiments of a communications device that use a first transceiver (e.g. passive, UHF, and/or energy harvesting radio), having a longer communications range/distance, to wake-up a second transceiver (e.g. active/higher-power/high-bandwidth/high data-rate, near-field radio) having a shorter communications range.

Using a wake-up signal, the second transceiver in such a communications device can be already booted-up and ready to communicate before other communications devices/nodes/etc. are even within the smaller second device's range/distance.

However, to conserve energy and/or improve security the second transceiver can be put in an off/standby/low-power mode (instead of being always-on) when other communications devices are well out of the smaller second device's range/distance.

In some example embodiments, the first transceiver includes a UHF/RFID reader/tag combination that wakes-up a second NFMI/high-bandwidth transceiver.

Applications of the example embodiments of the communications device enable very highly duty-cycled communication at unpredictable moments (e.g. when a mobile wearable device node begins to come close to an edge-node readout point) benefit from a radio system that is mostly off to preserve battery life, but also benefit from a high bandwidth to transmit a large burst of data while in range of the readout point.

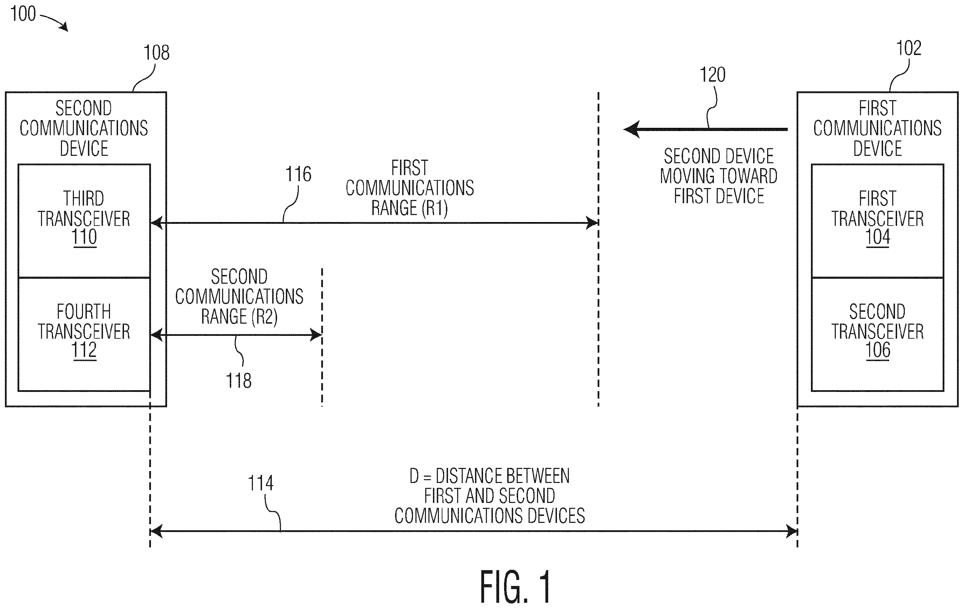

Figure 1 is an example 100 of a first communications device 102 about to pair with a second communications device 108. The first communications device 102 and the second communications device 108 are separated by a distance (D) 114.

The first communications device 102 (e.g. a mobile node, key fob, ...) includes a first transceiver 104 and a second transceiver 106. The second transceiver 106 has a lower-power state and a higher-power state. The second communications device 108 (e.g. edge node, car door) includes a third transceiver 110 and a fourth transceiver 112.

A first communications link between the first transceiver 104 and the third transceiver 110 has a first signal power level enabling a first communications range (R1) 116 and a first signal bandwidth/data-rate. A second communications link between the second transceiver 106 and the fourth transceiver 112 has a second signal power level enabling a second communications range (R2) 118 and a second signal bandwidth/data-rate.

Physical movement 120 between the first communications device 102 and the second communications device 108 will at some time bring the distance (D) 114, first to within the first communications range (R1) 116, and then to within the second communications range (R2) 118. Since the first communications range (R1) 116 is greater than the second communications range (R2) 118, the first communications link between the first transceiver 104 and the third transceiver 110 will be established before the second communications link between the second transceiver 106 and the fourth transceiver 112.

The first communications device 102 is configured to switch the second transceiver 106 from the lower-power state to the higher-power state in response to the first transceiver 104 first detecting a signal (e.g. a wake-up signal) from the third transceiver 110 in the second communications device 108.

In some example embodiments, the first and third transceivers 104, 110 are configured to communicate over a first frequency-band and the second and fourth transceivers 106, 112 are configured to communicate over a second frequency-band, and the first and second frequency-bands do not overlap.

In some example embodiments, the first frequency-band is a UHF-band; and the second frequency-band is an HF-band. These bands, or others, can include near-field signals (e.g. an NFEMI (near-field electromagnetic induction)-band communicating using a non-propagating quasi-static magnetic near-field signal and a non-propagating quasi-static electric near-field signals) and/or far-field signals.

In other example embodiments, the first and third transceivers 104, 110 are configured to communicate over a first frequency-band, the second and fourth transceivers 106, 112 are configured to communicate over a second frequency-band; however, the first and second frequency-bands overlap.

In some example embodiments, the first transceiver 104 is powered only by energy harvested from the signal received from the third transceiver 110. In some example embodiments, the first transceiver 104 is always-on, and the second transceiver 106 is only powered-on when the first transceiver 104 receives the signal from the third transceiver 110.

In some example embodiments, the difference in communications range of the first transceiver 104 and the second transceiver 106 is sufficiently great to allow for any anticipated movement (e.g. the physical movement 120) between the mobile node (e.g. the first communications device 102) and the edge node (e.g. the second communications device 108).

This difference in range permits the controller 206 to boot-up the second transceiver 106 before a person carrying the mobile key fob reaches the shorter communications range between the second transceiver 106 of the mobile device and the fourth transceiver 112 of the edge device. Thus in some example embodiments, the second transceiver 106 transitions from the lower-power state to the higher-power state before the second transceiver 106 is within the second distance (e.g. the second range (R2) 118) from the fourth transceiver 112.

In some example embodiments, the second transceiver 106 is configured to communicate with the fourth transceiver 112 in the higher-power state, and is configured not to communicate with the fourth transceiver 112 in the lower-power state.

In some example embodiments, the first communications device 102 is a mobile device and the second communications device 108 is an edge device. In other example embodiments, the first communications device 102 is embedded in a key fob; and the second communications device 108 is embedded in a security portal (e.g. door, gate, authentication device, etc.)

In some example embodiments, the first distance (e.g. the first range (R1) 116) is greater than 2.5 meters, and the second distance (e.g. the second range (R2) 118) is less than 1.5 meters.

In some example embodiments, the signal from the third transceiver 110 is a wake-up signal.

In various example embodiments there can be several edge nodes (e.g. the second communications device 108) (perhaps at fixed locations) and several mobile nodes (e.g. the first communications device 102). The edge node can have two radios, one high-bandwidth close-range (e.g. 2 meters, a.k.a. second range (R2) 118), and one low-bandwidth medium-range (e.g. 10 meters, a.k.a. first range (R1) 116). Similarly, the mobile node could have two radios, one passive (field-powered) medium-range (e.g. the first range (R1) 116), and one active close-range (e.g. second range (R2) 118).

In some example embodiments, the edge node third transceiver 110 operates in a UHF RF band and has an output power tuned to reach the first range (R1) 116, which in some examples could be just a few meters longer than the second range (R2) 118. The fourth transceiver 112 and be an NFMI transceiver with a large antenna coil having only a 1 meter range (e.g. the second range (R2) 118) but capable of a far higher data-rate (i.e. has a greater bandwidth) than the first and third transceivers 104, 110.

The edge nodes in some examples have a large energy supply (e.g. mains connected), and the mobile nodes have only a very limited energy supply (e.g. small battery). The edge node's UHF transmitter (e.g. the third transceiver 110) can be always-on if the edge node is connected to a mains power source.

The mobile node's first transceiver 104 detects the edge node's UHF transmitter signal, and after the edge node reader has transmitted some basic authentication data to the mobile node (e.g. key fob) over the UHF link, the mobile node's controller 206 is switches on the mobile node's NFMI transceiver 106 and enables fully communication between the edge and mobile nodes.

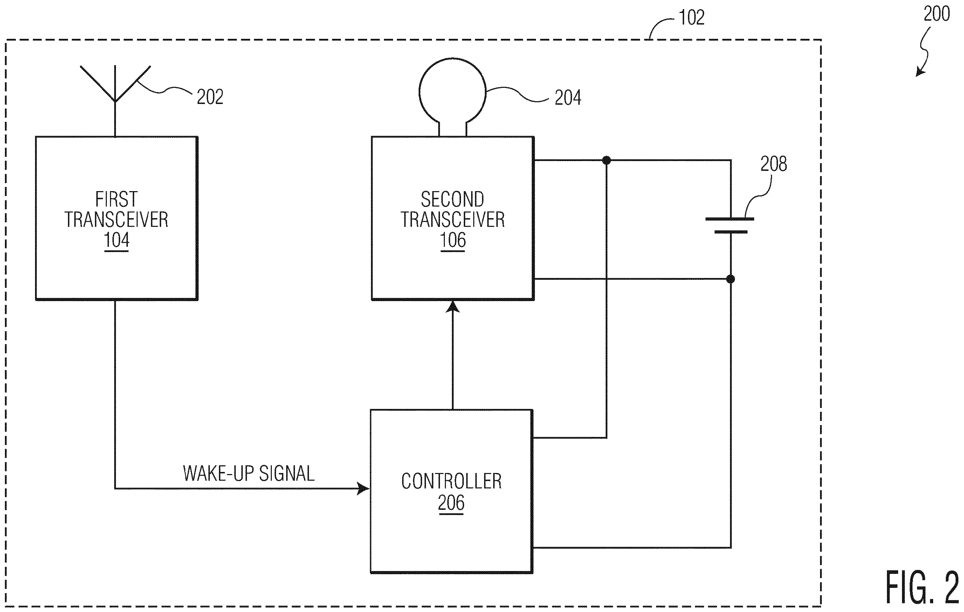

Figure 2 is a second example 200 of the first communications device 102 (e.g. a mobile node). In this example 200 the first communications device 102 includes the first receiver 104 coupled to antenna 202 (e.g. a UHF antenna) and the second transceiver 106 coupled to antenna 204 (e.g. an NFEMI antenna). A controller 206 and power source 208 (e.g. battery) are also shown. In some example embodiments the first and second antennas are physically separated, while in other examples they are integrated into a single antenna.

In this example embodiment, the first communications device 102 is configured to be coupled only to a limited battery power source 208. The second communications device 108 however can be configured to be coupled to a mains power source (not shown). Thus to conserve power, the second transceiver 106 in some example embodiments is not coupled to receive power from the power source 208 in the lower-power state, but is coupled to receive power from the power source 208 in the higher-power state.

The first transceiver 104 (e.g. long-range radio) is in some example embodiments powered by the electric field captured by and/or harvested from the antenna 202 and can generate a voltage high enough to switch on the controller 206 (e.g. microcontroller).

The controller 206 unit then verifies that it is indeed an edge node trying to contact the mobile node, and subsequently switch on the close-range radio (e.g. the second transceiver 106). For example, the mobile node in response to detecting the signal from the third transceiver 110 in the edge node, generates a wakeup pulse that activates the controller 206. The controller 206 can check it was activated by a valid edge node by fetching an authentication protocol from a memory, and if verified, then switch on the transceiver 106.

Thus an edge node (e.g. second communications device 108) can be configured as a creator, and the mobile node (e.g. first communications device 102) configured as a joiner. Then as soon as the mobile node enters the second range (R2) 118, it can connect to the edge node and any network that the edge node is connected to.

In one example embodiment, the communications device can be used in a smart locking/unlocking system. For example, smart locks (e.g. edge nodes) would require very fast recognition of key fobs (e.g. mobile nodes). The smart lock would integrate both a UHF reader (e.g. the first transceiver 104) and an NFMI transceiver (e.g. the second transceiver 106), as well as the security IC, and the key a UHF tag, controller 206, security chip, and NFMI transceiver.

In various other example embodiments other wireless protocols can be used such as WiFi, Bluetooth, optical, etc. In those example embodiments where the first and third transceivers 104, 110 and the second and fourth transceivers 106, 112 communicate using two different frequency bands, such band diversity increases security by making a "man in middle authentication attack" much harder to effect.

However in alternate example embodiments, the first and third transceivers 104, 110 and the second and fourth transceivers 106, 112 can communicate using a same frequency band but with different communications modes (e.g. a first near field magnetic mode and second far field electric mode).

Various instructions and/or operational steps discussed in the above Figures can be executed in any order, unless a specific order is explicitly stated. Also, those skilled in the art will recognize that while some example sets of instructions/steps have been discussed, the material in this specification can be combined in a variety of ways to yield other examples as well, and are to be understood within a context provided by this detailed description.

In some example embodiments these instructions/steps are implemented as functional and software instructions. In other embodiments, the instructions can be implemented either using logic gates, application specific chips, firmware, as well as other hardware forms.

When the instructions are embodied as a set of executable instructions in a non-transitory computer-readable or computer-usable media which are effected on a computer or machine programmed with and controlled by said executable instructions. Said instructions are loaded for execution on a processor (such as one or more CPUs). Said processor includes microprocessors, microcontrollers, processor modules or subsystems (including one or more microprocessors or microcontrollers), or other control or computing devices. A processor can refer to a single component or to plural components. Said computer-readable or computer-usable storage medium or media is (are) considered to be part of an article (or article of manufacture). An article or article of manufacture can refer to any manufactured single component or multiple components. The non-transitory machine or computer-usable media or mediums as defined herein excludes signals, but such media or mediums may be capable of receiving and processing information from signals and/or other transitory mediums.

It will be readily understood that the components of the embodiments as generally described herein and illustrated in the appended figures could be arranged and designed in a wide variety of different configurations. Thus, the detailed description of various embodiments, as represented in the figures, is not intended to limit the scope of the present disclosure but, is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment," "an embodiment," or similar language means that a particular feature, structure, or characteristic described in connection with the indicated embodiment is included in at least one embodiment of the present invention. Thus, the phrases "in one embodiment," "in an embodiment," and similar language throughout this specification may, but do not necessarily, all refer to the same embodiment.

## Claims

1. A first communications device, comprising:
a first transceiver;
a second transceiver;
wherein the first transceiver is configured as responsive to a third transceiver in a second communications device;
wherein the second transceiver is configured as responsive to a fourth transceiver in the second communications device;
wherein the second transceiver has a lower-power state and a higher-power state;
wherein the first and third transceivers communicate within a first distance at a first data-rate;
wherein the second and fourth transceivers communicate within a second distance at a second data-rate;
wherein the first distance is greater than the second distance;
wherein the first data-rate is less than the second data-rate; and
wherein the first communications device is configured to switch the second transceiver from the lower-power state to the higher-power state in response to the first transceiver first detecting a signal from the third transceiver in the second communications device.

2. The device of claim 1:
wherein the first and third transceivers are configured to communicate over a first frequency-band;
wherein the second and fourth transceivers are configured to communicate over a second frequency-band; and
wherein the first and second frequency-bands do not overlap.

3. The device of claim 2:
wherein the first frequency-band is a UHF-band; and
wherein the second frequency-band is a HF-band.

4. The device of claim 2 or 3:
wherein the second frequency-band is a NFEMI (near-field electromagnetic induction)-band, and
wherein the second and fourth transceivers are configured to communicate using a non-propagating quasi-static magnetic near-field signal and a non-propagating quasi-static electric near-field signals.

5. The device of claim 1:
wherein the first and third transceivers are configured to communicate over a first frequency-band using a first communications mode;
wherein the second and fourth transceivers are configured to communicate over a second frequency-band using a second communications mode; and
wherein the first and second frequency-bands overlap.

6. The device of any preceding claim:
wherein the first transceiver is powered only by energy harvested from the signal received from the third transceiver.

7. The device of any preceding claim:
wherein the first transceiver is always-on; and
wherein the second transceiver is only powered-on when the first transceiver receives the signal from the third transceiver.

8. The device of any preceding claim:
wherein the second transceiver transitions from the lower-power state to the higher-power state before the second transceiver is within the second distance from the fourth transceiver.

9. The device of any preceding claim:
wherein the second transceiver is not coupled to receive power from a power source in the lower-power state; and
wherein the second transceiver is coupled to receive power from the power source in the higher-power state.

10. The device of any preceding claim:
wherein the second transceiver is configured to communicate with the fourth transceiver in the higher-power state and, is configured not to communicate with the fourth transceiver in the lower-power state.

11. The device of any preceding claim:
wherein the first communications device is configured to be coupled only to a limited battery power source; and
wherein the second communications device is configured to be coupled to a mains power source.

12. The device of any preceding claim:
wherein a one of:
a) the first communications device is a mobile device, and
the second communications device is an edge device; and
b) the first communications device is embedded in a key foba and
the second communications device is embedded in a security portal.

13. The device of any preceding claim:
wherein the first distance is greater than 2.5 meters; and
wherein the second distance is less than 1.5 meters.

14. The device of any preceding claim:
wherein the signal from the third transceiver is a wake-up signal.

15. A method of establishing communication between a first communications device having a first and second transceivers, and a second communications device having third and fourth transceivers, comprising:
configuring the first transceiver in the first communications device to be responsive to the third transceiver in the second communications device;
configuring the second transceiver in the first communications device to be responsive to the fourth transceiver in the second communications device;
wherein the second transceiver in the first communications device has a lower-power state and a higher-power state;
wherein the first and third transceivers communicate within a first distance at a first data-rate;
wherein the second and fourth transceivers communicate within a second distance at a second data-rate;
wherein the first distance is greater than the second distance;
wherein the first data-rate is less than the second data-rate; and
configuring the first communications device to switch the second transceiver from the lower-power state to the higher-power state in response to the first transceiver first detecting a signal from the third transceiver in the second communications device.
